# EUROPÄISCHE PATENTANMELDUNG

(11) **EP 1 752 069 A1**
(43) Veröffentlichungstag der Anmeldung: **14.02.2007**
(21) Anmeldenummer: 05017517.3
(22) Anmeldetag: 11.08.2005
(51) Int. Cl.: A47C 27/06, A47C 23/00

(54) **Federelement für Federkernmatratzen und Untermatratzen**

(71) Anmelder: Diemer & Dr. Jaspert GbR, 85630 Grasbrunn (DE)
(72) Erfinder: Diemer, Gregor, 85456 Wartenberg (DE); Jaspert, Bodo, Dr., 85630 Neukeferloh (DE)
(74) Vertreter: Manitz, Finsterwald & Partner GbR

(57) **Zusammenfassung**

Federelement für Federkernmatratzen und, insbesondere Einzelstützelemente aufweisende, Untermatratzen mit einem insbesondere elastisch verformbare Federarme (1,2,3,4) aufweisenden Federkörper (10) aus Kunststoff, wobei zur Verbesserung der Dauergebrauchseigenschaften trotz hoher Federhärte der Federkörper (10) zwei Kunststoffe unterschiedlicher Härte aufweist, wobei der härtere Kunststoff in Bereichen (9) geringer Dehnung und der weichere Kunststoff in Bereichen großer Dehnung (5,6,7,8) vorgesehen ist.

## Beschreibung

Die vorliegende Erfindung betrifft ein Federelement für Federkernmatratzen und, insbesondere Einzelstützelemente aufweisende, Untermatratzen mit einem insbesondere elastisch verformbare Federarme aufweisenden Federkörper aus Kunststoff.

Federkernmatratzen werden bisher meist mit Metallfedern ausgerüstet. Diese haben jedoch Nachteile, insbesondere besteht Verletzungsgefahr bei einer Zerstörung der Matratze. Es wird daher versucht, Kunststofffedern in Federkernmatratzen einzusetzen. Diese sind jedoch hinsichtlich ihrer Materialeigenschaften problematisch. Insbesondere weisen sie einen höheren Setzbetrag bzw. Höhenverlust auf als Metallfedern. Auch kann die Federhärte im Laufe der Zeit abnehmen.

Der Erfindung liegt die Aufgabe zugrunde, ein Federelement der eingangs genannten Art mit verbesserten Eigenschaften anzugeben. insbesondere sollen der Setzbetrag bzw. Höhenverlust und die Federhärtenabnahme verringert werden.

Diese Aufgabe wird dadurch gelöst, dass der Federkörper zwei Kunststoffe unterschiedlicher Härte aufweist, wobei der härtere Kunststoff in Bereichen geringer Dehnung und der weichere Kunststoff in Bereichen großer Dehnung vorgesehen ist.

Durch die Anteile an hartem Kunststoff im Federelement kann mit verhältnismäßig wenig Material eine hohe Federhärte erreicht werden. Dabei wird durch die Anordnung des harten Kunststoffs in Bereichen geringer Dehnung verhindert, dass dessen Härte durch zu starke Dehnung im Laufe der Zeit zu stark abnimmt. Die Streckgrenze liegt nämlich bei harten Kunststoffen niedriger, so dass es bereits bei geringerer Dehnung zu plastischer Verformung mit Veränderung der Federeigenschaften kommen kann. Durch die Verwendung von weichem Kunststoff in den Bereichen großer Dehnung tritt dieses Problem nicht oder nur in verringertem Maße auf, da weiche Kunststoffe eine deutlich höhere Streckgrenze aufweisen. Andererseits tragen die verwendeten Anteile an weichem Kunststoff ebenfalls zur Gesamtfederhärte des Federelementes bei, so dass durch die Kombination insgesamt ein Federelement geschaffen wird, welches mit geringem Materialeinsatz eine gewünschte hohe Federhärte aufweist und gute Dauergebrauchseigenschaften zeigt.

Härterer Kunststoff kann erfindungsgemäß insbesondere im Bereich der so genannten neutralen Faser vorgesehen sein. Dies sind grundsätzlich die innen liegenden Bereiche des Federelements, aber natürlich auch die Bereiche, die aufgrund der Geometrie des Federelements keine oder nur eine sehr geringe Biegung erfahren.

Der weichere Kunststoff ist dagegen bevorzugt in außen liegenden Bereichen des Federelements vorgesehen. Dort tritt die größte Dehnung auf, so dass die Streckgrenze von härterem Kunststoff früher überschritten würde.

Härterer Kunststoff kann andererseits aber auch in Bereichen mit Stauchung eingesetzt werden, da die Gefahr plastischer Verformung in Stauchungsbereichen im Vergleich zu Dehnungsbereichen gering ist. Die Verteilung kann also insbesondere so aussehen, dass härterer Kunststoff im Bereich der neutralen Faser und in Stauchungsbereichen, weicherer Kunststoff dagegen in Bereichen mit Dehnung vorgesehen ist.

Nach einer weiteren Ausgestaltung der Erfindung kann härterer Kunststoff auch in Einspannbereichen und/oder Wendepunkten von Federarmen vorgesehen sein. Auch in diesen Bereichen tritt nur eine geringe Dehnung auf, so dass die Streckgrenze von härterem Kunststoff nicht oder sehr viel später erreicht wird.

Die Verteilung von härterem und weicherem Material kann insbesondere auch in Abhängigkeit von einem gewünschten Biegeverhalten gewählt sein. Dabei wird die Verteilung vorzugsweise in Abhängigkeit von der jeweiligen Verformungsgrenze gewählt. Die Federeigenschaften des Federelements können damit weiter verbessert werden.

Als Kunststoffmaterial kommt insbesondere Polyester in Betracht. Polyester weist für die Herstellung von Federelementen vorteilhafte Eigenschaften auf.

Anstatt zwei Kunststoffe mit unterschiedlicher Härte können auch drei oder mehr Kunststoffe mit unterschiedlicher Härte verwendet werden. Hier wie bei der Verwendung von zwei verschiedenen Kunststoffen kann natürlich grundsätzlich der gleiche Kunststofftyp, beispielsweise Polyester, verwendet werden. Die unterschiedliche Härte wird dann durch die weiteren Inhaltsstoffe bestimmt.

Zur Herstellung des erfindungsgemäßen Federelements kann ein Spritzgießverfahren verwendet werden. Das härtere Material kann dabei insbesondere mit weicherem Material umspritzt werden. Hiermit können gute Ergebnisse erzielt werden.

Bei der Verwendung von drei oder mehr Kunststoffen unterschiedlicher Härte kann die Herstellung insbesondere durch ein Injektionsverfahren erfolgen, bei welchem ein oder mehr Kunststoffe in die Spritzgießvorrichtung zusätzlich eingespritzt werden.

Ausführungsbeispiele der Erfindung sind in den Zeichnungen dargestellt und werden nachfolgend beschrieben. Es zeigen, jeweils in schematischer Darstellung:
- Fig. 1: ein einfaches Federelement und
- Fig. 2: das Federelement von Fig. 1 in komprimiertem Zustand.

Das dargestellte Federelement weist vier Federarme 1, 2, 3 und 4 auf, die zur Bildung eines Federkörpers 10 in Art einer Raute endseitig miteinander verbunden sind. Im Verbindungsbereich der beiden oberen Federarme 1, 2 kann eine Deckplatte, im Verbindungsbereich der beiden unteren Federarme 3, 4 eine Bodenplatte angeordnet sein. Durch Druck auf eine solche Deckplatte bzw. den Verbindungsbereich zwischen den beiden Federarmen 1 und 2 in Richtung von Pfeil I kann das Federelement komprimiert werden.

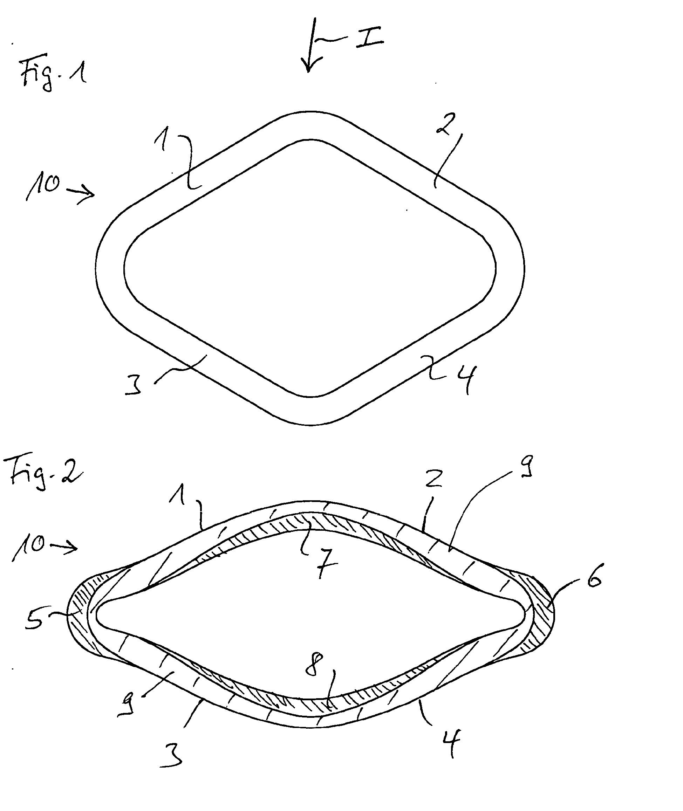

Fig. 2 zeigt ein solchermaßen komprimiertes Federelement mit Federarmen 1, 2, 3 und 4. In dieser Darstellung sind die Bereiche mit weichem Kunststoffmaterial einerseits und hartem Kunststoffmaterial andererseits durch unterschiedliche Schraffur kenntlich gemacht. Weiches Kunststoffmaterial ist mit engerer, hartes Kunststoffmaterial mit weiterer Schraffur gekennzeichnet.

Wie man sieht, ist weiches Kunststoffmaterial in den äußeren Verbindungsbereichen 5, 6 der beiden in Fig. 1 und 2 linken Federarme 1, 3 einerseits und der beiden rechten Federarme 2, 4 andererseits angeordnet. Diese Bereiche unterliegen bei der Kompression des Federelements einer relativ starken Dehnung. Darüber hinaus ist weiches Kunststoffmaterial im unteren Bereich 7 der beiden oberen Federarme 1, 2 und im oberen Bereich 8 der beiden unteren Federarme 3, 4 angeordnet. Auch diese Bereiche 7, 8 unterliegen bei Kompression des Federelements einer relativ starken Dehnung.

Hartes Kunststoffmaterial ist dagegen in den übrigen Bereichen 9 angeordnet. Hier tritt eine vergleichsweise geringe Dehnung bzw. nur eine Stauchung auf. Bei einer Kompression des Federelements wird hier daher nicht die Streckgrenze des harten Kunststoffmaterials erreicht, so dass eine plastische Verformung weitgehend ausgeschlossen werden kann. Dies hat den Vorteil, dass einerseits durch die Verwendung von hartem Kunststoffmaterial eine hohe Federhärte eingestellt und andererseits durch die Anordnung des härteren Kunststoffmaterials nur in den Bereichen 9 geringer Dehnung eine gute Dauerhaltbarkeit gewährleistet werden kann.

In entsprechender Weise können auch drei oder mehr Kunststoffe unterschiedlicher Härte verwendet werden, wobei die Verteilung der unterschiedlichen Kunststoffe so gewählt ist, dass der weichste Kunststoff in den Bereichen größter Dehnung und der härteste Kunststoff in den Bereichen geringster Dehnung bzw. ausschließlicher Stauchung angeordnet ist. Die Übergänge zwischen den verschiedenen Kunststoffen können jeweils auch fließend gewählt sein.

### Bezugszeichenliste

- 1: Federarm
- 2: Federarm
- 3: Federarm
- 4: Federarm
- 5: Bereich
- 6: Bereich
- 7: Bereich
- 8: Bereich
- 9: Bereich
- 10: Federkörper
- I: Kompressionsrichtung

## Patentansprüche

1. Federelement für Federkernmatratzen und, insbesondere Einzelstützelemente aufweisende, Untermatratzen mit einem insbesondere elastisch verformbare Federarme (1, 2, 3, 4) aufweisenden Federkörper (10) aus Kunststoff,
**dadurch gekennzeichnet, dass**
der Federkörper (10) zwei Kunststoffe unterschiedlicher Härte aufweist, wobei der härtere Kunststoff in Bereichen (9) geringer Dehnung und der weichere Kunststoff in Bereichen großer Dehnung (5, 6, 7, 8) vorgesehen ist.

2. Federelement nach Anspruch 1,
**dadurch gekennzeichnet, dass**
härterer Kunststoff im Bereich der so genannten neutralen Faser vorgesehen ist.

3. Federelement nach Anspruch 1 oder 2,
**dadurch gekennzeichnet, dass**
weicherer Kunststoff in außen liegenden Bereichen des Federelements vorgesehen ist.

4. Federelement nach einem der vorhergehenden Ansprüchen,
**dadurch gekennzeichnet, dass**
härterer Kunststoff in Bereichen mit Stauchung und weicherer Kunststoff in Bereichen mit Dehnung vorgesehen ist.

5. Federelement nach einem der vorhergehenden Ansprüchen,
**dadurch gekennzeichnet, dass**
härterer Kunststoff in Einspannbereichen und/oder Wendepunkten von Federarmen (1, 2, 3, 4) vorgesehen ist.

6. Federelement nach einem der vorhergehenden Ansprüchen,
**dadurch gekennzeichnet, dass**
der Federkörper (10) durch Spritzgießen hergestellt ist.

7. Federelement nach Anspruch 6,
**dadurch gekennzeichnet, dass**
das härtere Material mit weicherem Material umspritzt ist.

8. Federelement nach einem der vorhergehenden Ansprüchen,
**dadurch gekennzeichnet, dass**
die Verteilung von härterem und weicherem Material in Abhängigkeit von einem gewünschten Biegeverhalten gewählt ist.

9. Federelement nach einem der vorhergehenden Ansprüchen,
**dadurch gekennzeichnet, dass**
die Verteilung in Abhängigkeit von der jeweiligen Verformungsgrenze des Materials gewählt ist.

10. Federelement nach einem der vorhergehenden Ansprüchen,
**dadurch gekennzeichnet, dass**
als Kunststoffmaterial Polyester verwendet ist.

11. Federelement nach einem der vorhergehenden Ansprüchen,
**dadurch gekennzeichnet, dass**
drei oder mehr Kunststoffe unterschiedlicher Härte vorgesehen sind.

12. Federelement nach einem der vorhergehenden Ansprüchen,
**dadurch gekennzeichnet, dass**
der Federkörper (10) im Injektionsverfahren hergestellt ist.
